# EUROPÄISCHE PATENTSCHRIFT

(11) **EP 1 725 357 B1**
(45) Veröffentlichungstag und Bekanntmachung des Hinweises auf die Patenterteilung: **08.09.2010**
(21) Anmeldenummer: 05707683.8
(22) Anmeldetag: 02.03.2005
(51) Int. Cl.: B23B 51/02

(54) **SPIRALBOHRER**
TWIST DRILL
FORET HELICOIDAL

(30) Priorität: 17.03.2004 DE 202004004287 U
(43) Veröffentlichungstag der Anmeldung: 29.11.2006
(73) Patentinhaber: Kennametal Inc., Latrobe, PA 15650-0231 (US); Bayerische Motoren Werke Aktiengesellschaft, 80809 München (DE)
(72) Erfinder: LANG, Wolfgang, 92533 Wernberg-Köblitz (DE); SCHREINER, Günter, 94377 Steinach (DE)
(74) Vertreter: Freier, Rüdiger
(86) Internationale Anmeldenummer: PCT/EP2005/002187
(87) Internationale Veröffentlichungsnummer: WO 2005/092547

(56) Entgegenhaltungen:
- EP-A- 0 761 352
- FR-A- 2 433 996
- US-A- 3 387 511
- US-A- 5 678 960
- US-A1- 2003 053 873
- US-A1- 2003 215 297
- PATENT ABSTRACTS OF JAPAN Bd. 013, Nr. 055 (M-795), 8. Februar 1989 (1989-02-08) & JP 63 260713 A (SUMITOMO ELECTRIC IND LTD), 27. Oktober 1988 (1988-10-27)

## Beschreibung

Die Erfindung bezieht sich auf einen Spiralbohrer, insbesondere zur Bearbeitung von Aluminiumknetlegierungen, gemäß dem Oberbegriff der Ansprüche 1 oder 2 mit einem Bohrerschaft und einem in eine Bohrspitze mündenden Schneidteil, entlang dessen unter Bildung eines Bohrerkerns wendelförmige Spannuten vorgesehen sind. Ein solcher Spiralbohrer ist aus der US-A-5 678 960 bekannt.

Bei der Bearbeitung von Aluminiumknetlegierungen, z. B. AIMgSi1 oder AlMgSi0,5, führt der Einsatz herkömmlicher Werkzeuge oder Spiralbohrer, beispielsweise in Folge Verklebungen, zu einer erheblich begrenzten Standzeit des Werkzeugs. Auch der Einsatz von öligen oder ölhaltigen Schmiermittel führt nicht zu einem befriedigenden Ergebnis, zumal die Verwendung solcher Schmiermittel zur Standzeiterhöhung des Werkzeuges im Karosseriebau von Kraftfahrzeugen nicht bedenkenlos möglich ist. Grund hierfür ist, dass Schweiß- und/oder Lackierarbeiten sowie Klebearbeiten an der Karosserie gewährleistet bleiben müssen und ein Reinigungsprozess vor der Weiterverarbeitung der Karosserie aus Kosten- und Platzbedarfgründen nicht darstellbar ist.

Der Erfindung liegt die Aufgabe zu Grunde, einen Spiralbohrer der eingangs genannten Art anzugeben, mit dem die Bearbeitung auch von Aluminiumknetlegierungen möglich ist. Dabei soll ein Zerspanen dieses Materials im Serienprozess bei einer Bohrtiefe von insbesondere etwa dem 5-fachen des Bohrerdurchmessers ermöglicht sein.

Diese Aufgabe wird erfindungsgemäß gelöst durch die Merkmale des Ansprüch 1. Alternativ wird diese Aufgabe erfindungsgemäß gelöst durch die Merkmale des Anspruchs 2. Dazu weist der Spiralbohrer an der Bohrspitze eine Kerndicke von (15 ± 3)% des Bohrerdurchmessers und eine Verjüngung des Bohrer- bzw. Schneidendurchmessers und/oder der Kerndicke von der Bohrerspitze zum Schaft hin sowie einen Primärfreiwinkel von (19 ± 3)° und einen Sekundärfreiwinkel von (26 ± 4)° auf.

Die Verjüngung der Kerndicke bzw. des Bohrer- oder Schneidendurchmessers des Spiralbohrers beträgt 0,5mm bis 0,9mm, vorzugsweise 0,8mm, bezogen auf 100mm Bohrerlänge. Ein besonders bevorzugter Primärfreiwinkel beträgt 18°, während ein bevorzugter Sekundärfreiwinkel 25° beträgt. Der Spitzenwinkel des Spiralbohrers ist zweckmäßigerweise 120°.

Nach der ISO-Norm 5419 ist der Primär- oder Seitenfreiwinkel der Winkel zwischen einer Freifläche und einer Ebene, die die Schneide und die angenommene Richtung der Schnittbewegung an einem gewählten Punkt auf der Schneide enthält, gemessen in der Ebene senkrecht zum Radius am gewählten Punkt. Dieser Winkel wird an der Schneidenecke gemessen. Der Neben- oder Normalfreiwinkel ist der Winkel zwischen einer Hauptfreifläche und einer Ebene, die die Schneide und die angenommene Richtung der Schnittbewegung am gewählten Punkt auf der Schneide enthält, gemessen in der Ebene senkrecht zur Schneide am gewählten Punkt.

In vorteilhafter Ausgestaltung weist der Spiralbohrer zweckmäßigerweise zwei Innenkühlungsbohrungen auf, die im Bereich der Bohrerspitze in den Hauptfreiflächen ausmünden. Der Spiral- oder Drallwinkel der Spannuten beträgt etwa 30°. Bei dieser Geometrie, die sich für Bohrerdurchmesser größer 6mm besonders eignet, sind zweckmäßigerweise zwei Innenkühlungsbohrungen vorgesehen. Bei einem ebenfalls vorteilhaften Drall- oder Spiralwinkel von ca. 40° sind zweckmäßigerweise keine Innenkühlungsbohrungen vorgesehen. Diese Geometrie eignet sich besonders für Spiralbohrer mit einem Bohrerdurchmesser kleiner oder gleich 6mm.

In besonders bevorzugter Ausgestaltung sind die Oberflächen des Schneidteils des Spiralbohrers zunächst bis zu einer Mittenrauhigkeit von R_{A} ≅ 0,2 geschliffen. Anschließend werden die entsprechenden Oberflächen bis zu einer mittleren Rauheit von R_{A} ≤ 0,1 feinst geschliffen. Der Feinstschliff erfolgt zweckmäßigerweise sowohl in den Spannuten als auch an den Haupt- und Nebenfreiflächen und den Führungsfasen des Schneidteils.

Zweckmäßigerweise sind die genannten Flächen, d.h die Spannuten, die Freiflächen und/oder die Führungsfasen des Spiralbohrer beschichtet, wobei vorzugsweise eine sogenannte Diamant-Like-Carbon-Beschichtung (DLC- oder Balinit® Triton Beschichtung der Firma Balzers) vorgesehen ist.

In weiterer zweckmäßiger Ausgestaltung ist die im Bereich der Bohrerspitze gemessene Rückenbreite des Schneidenrückens 50%, vorzugsweise jedoch kleiner als 50% des Bohrerdurchmessers.

Die mit der Erfindung erzielten Vorteile bestehen insbesondere darin, dass mit einem Spiralbohrer mit der genannten Geometrie sowie in zweckmäßiger Ausführung mit einer Beschichtung der genannten Bohrerflächen ein verklebungsfreies Zerspanen von Aluminiumknetlegierungen im Serienprozess bei einer Bohrtiefe von mindestens dem 5-fachen des Bohrerdurchmessers möglich ist. Dabei sind der Bohrerver-schleiß erheblich reduziert und eine hohe Lebensdauer oder Standzeit erreicht. Durch eine entsprechende Schnittwerterhöhung kann zudem eine besonders kurze Bearbeitungszeit erreicht werden.

Nachfolgend wird ein Ausführungsbeispiel der Erfindung anhand einer Zeichnung näher erläutert. Darin zeigen:
- Fig. 1: eine Seitenansicht des erfindungsgemäßen Spiralbohrers,
- Fig. 2: in Stirnansicht die Bohrerspitze und in vergrößertem Maßstab einen ge- wählten Punkt auf einer Schneide zur Darstellung der Freiwinkel, und
- Fig. 3: eine schematische Seitenansicht des Spiralbohrers gemäß Figur 1 mit sich verjüngendem Bohrerdurchmesser bzw. Bohrerkem.

Einander entsprechende Teile sind in allen Figuren mit den gleichen Bezugszeichen versehen.

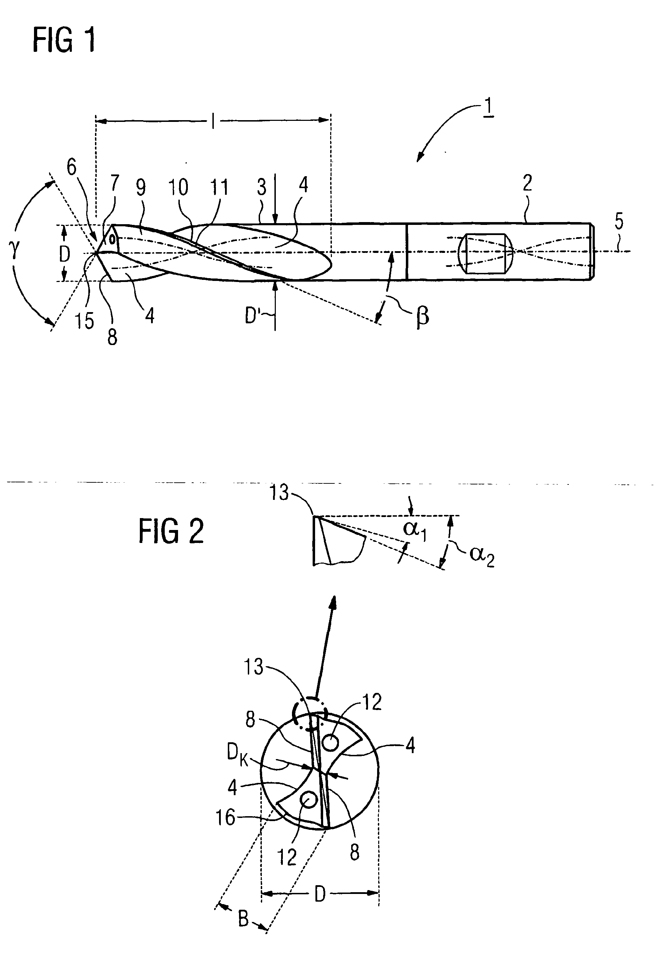

Figur 1 zeigt einen Spiralbohrer 1 mit einem im wesentlichen zylindrischen Grundkörper, der einen Schaft 2 und ein Schneidteil 3 mit einer Schneidteillänge I aufweist. In die Mantelfläche des Bohrers 1 oder dessen Schneidteils 3 sind zwei sich diametral gegenüberliegende Spannuten 4 eingeformt. Die Spannuten 4 erstrecken sich wendelförmig um die Mittelachse 5 des Bohrers 1 und münden in der die Bohrerspitze 6 bildenden Stirnseite des Bohrers 1. Die Mittellängsachse 5 des Bohrers 1 ist gleichzeitig dessen Rotationsachse, um die der Bohrer 1 während seiner Anwendung drehbar ist.

Der Spiralbohrer 1 weist des weiteren zwei Hauptfreiflächen 7 und zwei Hauptschneiden 8 sowie zwei Nebenfreiflächen 9 mit jeweils einer Führungsfase 10 und einer Nebenschneide 11 auf. Der Spiral- oder Drallwinkel β beträgt vorzugsweise (30 ± 3)°, zweckmäßigerweise 30°, oder (40 ± 3)°, zweckmäßigerweise 40°. Der Spitzenwinkel γ beträgt vorzugsweise (120 ± 1)°.

In der in Figur 2 dargestellten Stirnansicht sind in die Hauptfreiflächen 7 mündende Innenkühlkanalbohrungen 12 für ein Schmiermittel sichtbar. Dieses wird beim Bearbeiten von Aluminiumknetlegierungen für eine impulsgesteuerte Mindermengenschmierung über die Kühlkanalbohrungen 12 geführt und als Schmiernebel mit hohem Luftanteil auf die zu spanende Bohrungsfläche gesprüht.

Die Spannuten 4 sowie zweckmäßigerweise auch die Freiflächen 7 und die Führungsfasen 10 sind poliert, d.h. fein geschliffen mit einer mittleren Rauhigkeit R_{A} ≤ 0,1. Dabei sind die Oberflächen des Schneidteils 3 zunächst bis zu einer Mittenrauhigkeit von R_{A} ≅ 0,2 mit einer entsprechenden Schleifkörnung, z. B. D46, geschliffen. In einem anschließenden Feinstschleifschritt mit einer entsprechenden Körnung, z. B. D20, wird eine mittlere Rauheit von R_{A} ≤ 0,1 hergestellt. Zudem sind die Spannuten 4 sowie die Freiflächen 7, 9 und die Führungsfasen 10 mit einer Beschichtung, zweckmäßigerweise einer DLC-Beschichtung, versehen.

Der eingezeichnete Kerndurchmesser Dₖ des Spiralbohrers 1 beträgt vorzugsweise 14% des Bohrerdurchmessers D, gemessen an der Bohrerspitze 6.

In dem in Figur 2 herausgezeichneten vergrößerten Ausschnitt mit Blick auf eine Hauptschneidenecke 13 sind die Freiwinkel α₁, α₂ eingezeichnet. Dabei beträgt der Primär- oder Seitenfreiwinkel (Hauptfreiwinkel) α₁ vorzugsweise 18°, während der Sekundär- oder Normalfreiwinkel (Nebenfreiwinkel) α₂ vorzugsweise 25° beträgt. In zweckmäßiger Ausgestaltung ist die im Bereich der Bohrerspitze 6, d. h. an den einer dort vorgesehenen Querschneide 15 gegenüberliegenden, abfallenden Seiten gemessene Rückenbreite B des Schneidenrückens 16 vorzugsweise kleiner als 50% des Bohrerdurchmessers D (B ≤ 0,5 • D).

Gemäß der Darstellung in Figur 1 ist der Bohrerdurchmesser D des Spiralbohrers 1 ausgehend von der Bohrerspitze 6 auf einen Bohrerduchrmesser D' zum Schaft 2 hin verjüngt, so dass D' kleiner D ist (D' < D). Die vorzugsweise kontinuierliche Verjüngung des Bohrerdurchmessers D des Bohrers 1 beträgt ausgehend von der Bohrerspitze 6 bzw. der dort vorgesehenen Querschneide 15 etwa 0,8mm bezogen auf 100mm Bohrerlänge.

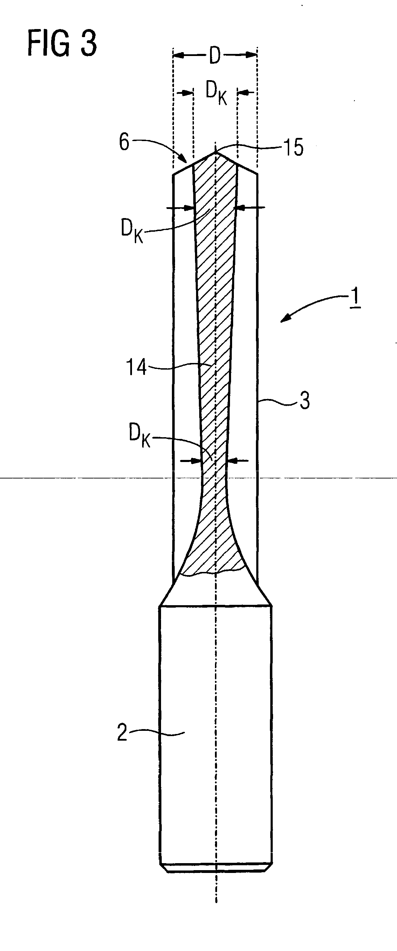

Gemäß der Darstellung in Figur 3 nimmt zusätzlich oder alternativ auch der Kerndurchmesser oder die Kerndicke Dₖ des Bohrerkerns 14 zum Schaft 2 hin vorzugsweise kontinuierlich ab. Die Verjüngung des Kerndurchmessers Dₖ des Bohrers 1 beträgt ausgehend von der Bohrerspitze 6 bzw. der dort vorgesehenen Querschneide 15 ebenfalls etwa 0,8mm bezogen auf 100mm Bohrerlänge.

## Patentansprüche

1. Spiralbohrer (1), insbesondere zur Bearbeitung von Aluminiumknetlegierungen, mit einem Bohrerschaft (2) und einem sich bis zu einer Bohrerspitze (6) erstreckenden Schneidteil (3),
- mit unter Bildung eines Bohrerkerns (15) wendelförmigen Spannuten (4) entlang des Schneidteils (3),
- mit einer Verjüngung der Kerndicke (Dₖ) von der Bohrerspitze (6) zum Schaft (2) hin, **gekennzeichnet durch** :
- eine Kerndicke (Dₖ) an der Bohrerspitze (6) von (15 ± 3)% des Bohrerdurchmessers (D), und
- einen Primärfreiwinkel (α₁) von α₁ = (19 ± 3)° und einem Sekundärfreiwinkel (α₂) von α₂ = (26 ± 4)°.

2. Spiralbohrer (1), insbesondere zur Bearbeitung von Aluminiumknetlegierungen, mit einem Bohrerschaft (2) und einem sich bis zu einer Bohrerspitze (6) erstreckenden Schneidteil (3),
- mit unter Bildung eines Bohrerkerns (15) wendelförmigen Spannuten (4) entlang des Schneidteils (3), **gekennzeichnet durch** :
- eine Kerndicke (Dₖ) an der Bohrerspitze (6) von (15 ± 3)% des Bohrerdurchmessers (D),
- eine Verjüngung des Bohrerdurchmessers (D) von der Bohrerspitze (6) zum Schaft (2) hin, und
- einen Primärfreiwinkel (α₁) von α₁ = (19 ± 3)° und einem Sekundärfreiwinkel (α₂) von α₂ = (26 ± 4)°.

3. Spiralbohrer nach Anspruch 1 oder 2,
**gekennzeichnet durch**
einen Spiralwinkel (β) von β = (30 ± 3)°, vorzugsweise β = 30°, oder β = (40 ± 3)°, vorzugsweise β = 40°.

4. Spiralbohrer nach einem der Ansprüche 1 bis 3,
**gekennzeichnet durch**
mindestens eine im Bereich der Bohrerspitze (6) ausmündende Schmiermittelbohrung (12).

5. Spiralbohrer nach einem der Ansprüche 1 bis 4,
**gekennzeichnet durch**
eine Verjüngung der Kerndicke (Dₖ) und/oder des Bohrerdurchmessers (D) um (0,7 ± 0,2) bezogen auf 100mm Bohrerlänge (I).

6. Spiralbohrer nach einem der Ansprüche 1 bis 5,
**gekennzeichnet durch**
feinst geschliffene Oberflächen des Schneidteils (3), insbesondere der Spannuten (4), der Freiflächen (7) und/oder der Führungsfasen (10).

7. Spiralbohrer nach Anspruch 6,
**gekennzeichnet durch**
einen mittleren Rauhwert von R_{A} ≤ 0,1.

8. Spiralbohrer nach einem der Ansprüche 1 bis 7,
**gekennzeichnet durch**
eine Beschichtung, vorzugsweise eine DLC-Beschichtung, der Spannuten (4), der Freiflächen (7, 9) und/oder der Führungsfasen (10).

9. Spiralbohrer nach einem der Ansprüche 1 bis 8,
**gekennzeichnet durch**
einen Primärfreiwinkel von α₁ = (18 ± 0,5)°.

10. Spiralbohrer nach einem der Ansprüche 1 bis 9,
**gekennzeichnet durch**
einen Sekundärfreiwinkel von α₂ = (25 ± 0,5)°.

11. Spiralbohrer nach einem der Ansprüche 1 bis 10,
**gekennzeichnet durch**
ein Spitzenwinkel (γ) von γ = (120 ± 5)°, vorzugsweise γ = (120 ± 0,5)°.

12. Spiralbohrer nach einem der Ansprüche 1 bis 11,
**gekennzeichnet durch**
eine Rückenbreite (B) des Schneidenrückens (16) von kleiner oder gleich 50% des Bohrerdurchmessers (D).

## Claims

1. Twist drill (1), in particular for machining wrought aluminium alloys, having a drill shank (2) and a cutting part (3) that extends as far as a drill point (6),
- having helical flutes (4) that extend along the cutting part (3) to form a drill core (15),
- having a tapering of the core thickness (Dₖ) from the drill point (6) towards the shank (2), **characterized by**:
- a core thickness (Dₖ) at the drill point (6) of (15 ± 3)% of the drill diameter (D), and
- a primary clearance angle (α₁) of α₁ = (19 ± 3)° and a secondary clearance angle (α₂) of α₂ = (26 ± 4)°.

2. Twist drill (1), in particular for machining wrought aluminium alloys, having a drill shank (2) and a cutting part (3) that extends as far as a drill point (6),
- having helical flutes (4) that extend along the cutting part (3) to form a drill core (15), **characterized by**:
- a core thickness (Dₖ) at the drill point (6) of (15 ± 3)% of the drill diameter (D),
- a tapering of the drill diameter (D) from the drill point (6) towards the shank (2), and
- a primary clearance angle (α₁) of α₁ = (19 ± 3)° and a secondary clearance angle (α₂) of α₂ = (26 ± 4)°.

3. Twist drill according to Claim 1 or 2,
**characterized by**
a helix angle (β) of β = (30 ± 3)°, preferably β = 30°, or β = (40 ± 3)°, preferably β = 40°.

4. Twist drill according to one of Claims 1 to 3,
**characterized by**
at least one lubricant bore (12) that opens out in the region of the drill point (6).

5. Twist drill according to one of Claims 1 to 4,
**characterized by**
a tapering of the core thickness (Dₖ) and/or of the drill diameter (D) by (0.7 ± 0.2) mm with respect to a drill length (1) of 100 mm.

6. Twist drill according to one of Claims 1 to 5,
**characterized by**
extremely finely ground surfaces of the cutting part (3), in particular of the flutes (4), of the flanks (7) and/or of the guide bevels (10).

7. Twist drill according to Claim 6,
**characterized by**
an average roughness of R_{A} ≤ 0.1.

8. Twist drill according to one of Claims 1 to 7,
**characterized by**
a coating, preferably a DLC coating, of the flutes (4), of the flanks (7, 9) and/or of the guide bevels (10).

9. Twist drill according to one of Claims 1 to 8,
**characterized by**
a primary clearance angle of α₁ = (18 ± 0.5)°.

10. Twist drill according to one of Claims 1 to 9,
**characterized by**
a secondary clearance angle of α₂ = (25 ± 0.5)°.

11. Twist drill according to one of Claims 1 to 10,
**characterized by**
a point angle (γ) of γ = (120 ± 5)°, preferably γ = (120 ± 0.5)°.

12. Twist drill according to one of Claims 1 to 11,
**characterized by**
a land width (B) of the cutting land (16) of less than or equal to 50% of the drill diameter (D).

## Revendications

1. Foret hélicoïdal (1), en particulier pour l'usinage d'alliages d'aluminium forgeable, comprenant une tige de foret (2) et une partie de coupe (3) s'étendant jusqu'à une pointe de foret (6),
- avec des rainures de serrage (4) de forme hélicoïdale formant un noyau de foret (15), le long de la partie de coupe (3),
- avec un rétrécissement de l'épaisseur du noyau (Dₖ) de la pointe du foret (6) jusqu'à la tige (2), **caractérisé par** :
- une épaisseur de noyau (Dₖ) sur la pointe de foret (6) de (15±3)% du diamètre du foret (D), et
- un angle de dépouille primaire (α₁) de α₁ = (19±3)° et un angle de dépouille secondaire (α₂) de α₂ = (26±4)°.

2. Foret hélicoïdal (1), en particulier pour l'usinage d'alliages d'aluminium forgeable, comprenant une tige de foret (2) et une partie de coupe (3) s'étendant jusqu'à une pointe de foret (6),
- avec des rainures de serrage (4) de forme hélicoïdale formant un noyau de foret (15), le long de la partie de coupe (3),
**caractérisé par** :
- une épaisseur de noyau (Dₖ) sur la pointe de foret (6) de (15±3)% du diamètre du foret (D),
- un rétrécissement du diamètre du foret (D) de la pointe du foret (6) jusqu'à la tige (2), et
- un angle de dépouille primaire (α₁) de α₁ = (19±3)° et un angle de dépouille secondaire (α₂) de α₂ = (26±4)°.

3. Foret hélicoïdal selon la revendication 1 ou 2,
**caractérisé par**
un angle hélicoïdal (β) de β = (30±3)°, de préférence de β = 30°, ou de β = (40±3)°, de préférence de β = 40°.

4. Foret hélicoïdal selon l'une quelconque des revendications 1 à 3,
**caractérisé par**
au moins un alésage pour lubrifiant (12) débouchant dans la région de la pointe de foret (6).

5. Foret hélicoïdal selon l'une quelconque des revendications 1 à 4,
**caractérisé par**
un rétrécissement de l'épaisseur de noyau (Dₖ) et/ou du diamètre de foret (D) de (0,7±0,2) mm par rapport à une longueur de foret de 100 mm (1).

6. Foret hélicoïdal selon l'une quelconque des revendications 1 à 5,
**caractérisé par**
des surfaces finement meulées de la partie de coupe (3), en particulier des rainures de serrage (4), des surfaces libres (7) et/ou des biseaux de guidage (10).

7. Foret hélicoïdal selon la revendication 6,
**caractérisé par**
une valeur de rugosité moyenne de R_{A} ≤ 0,1.

8. Foret hélicoïdal selon l'une quelconque des revendications 1 à 7,
**caractérisé par**
un revêtement, de préférence un revêtement DLC (carbone de type diamant), des rainures de serrage (4), des surfaces libres (7, 9) et/ou des biseaux de guidage (10).

9. Foret hélicoïdal selon l'une quelconque des revendications 1 à 8,
**caractérisé par**
un angle de dépouille primaire de α₁ = (18±0,5)°.

10. Foret hélicoïdal selon l'une quelconque des revendications 1 à 9,
**caractérisé par**
un angle de dépouille secondaire de α₂ = (25±0,5)°.

11. Foret hélicoïdal selon l'une quelconque des revendications 1 à 10,
**caractérisé par**
un angle de pointe (γ) de γ = (120±5)°, de préférence de γ = (120±0,5)°.

12. Foret hélicoïdal selon l'une quelconque des revendications 1 à 11,
**caractérisé par**
une largeur de dos (B) du dos de coupe (16) inférieure ou égale à 50% du diamètre du foret (D).
